# EUROPÄISCHE PATENTSCHRIFT

(11) **EP 2 811 604 B1**
(45) Veröffentlichungstag und Bekanntmachung des Hinweises auf die Patenterteilung: **05.10.2016**
(21) Anmeldenummer: 14170384.3
(22) Anmeldetag: 28.05.2014
(51) Int. Cl.: H02H 1/04, H02H 9/00, H02H 3/38

(54) **Verfahren zur Steuerung eines Schutzschalters, sowie Schutzschalter**
Method for controlling a circuit breaker, and circuit breaker
Procédé de commande d'un disjoncteur, et disjoncteur

(30) Priorität: 07.06.2013 DE 102013105942
(43) Veröffentlichungstag der Anmeldung: 10.12.2014
(73) Patentinhaber: Murrelektronik GmbH, 71570 Oppenweiler (DE)
(72) Erfinder: Pan, Hangwen, 71522 Backnang (DE)
(74) Vertreter: Prinz & Partner mbB

(56) Entgegenhaltungen:
- EP-A2- 2 398 146
- US-A1- 2007 223 164

## Beschreibung

Die Erfindung betrifft ein Verfahren zur Steuerung eines Schutzschalters sowie einen Schutzschalter.

Elektronische Schutzschalter sind zwischen einer Stromversorgung und einer oder mehrerer Lasten angeordnet und dienen dazu, die Stromversorgung zu defekten Lasten, insbesondere bei Auftreten von Kurzschlüssen, zu unterbrechen. Üblicherweise werden elektronische Schutzschalter nicht ausschließlich durch eine Sicherung realisiert, sondern besitzen ein aktiv schaltbares Stellglied. Dabei kann das Stellglied die Stromversorgung zur Last unterbrechen, wenn ein Kurzschluss in der Last detektiert wird. Die Detektion eines Kurzschlusses erfolgt üblicherweise durch eine Messung des durch den Schutzschalter fließenden Stroms, wobei bei Überschreitung eines zuvor festgelegten Stromgrenzwertes das Stellglied ausgelöst wird, das die Stromversorgung unterbricht.

Jedoch erzeugen schwere Lasten, wie zum Beispiel größere kapazitive Lasten oder große Motoren, beim Einschalten sehr große Ströme durch den Schutzschalter, die durchaus den Stromgrenzwert überschreiten können, obwohl kein Kurzschluss vorliegt. Solche Lasten können nicht mit üblichen Schutzschaltern betrieben werden, da der Schutzschalter beim Anlaufen solcher schwerer Lasten regelmäßig auslöst.

Die US 2007/0223164 A1 offenbart eine Schutzschaltung für einen Transistor, über den eine Last mit Strom versorgt wird. Um den Betrieb von größeren kapazitiven Lasten mit dem Transistor zu ermöglichen, werden zwei unterschiedliche Stromgrenzwerte verwendet. Überschreitet der Strom durch den Transistor den verwendeten Stromgrenzwert, wird die Stromversorgung der Last unterbrochen. Die Auswahl, ob der höhere oder der niedrigere der beiden Stromgrenzwerte verwendet werden soll, wird mittels einer Spannungsmessung vorgenommen und ist zudem davon abhängig, ob die Schaltung soeben in Betrieb genommen wurde.

Die EP 2 398 146 A2 zeigt einen Spannungswandler, der mittels eines Überstromschutzes mit einem Stellglied geschützt ist. Ein beschriebenes Verfahren zur Inbetriebnahme großer kapazitiver Lasten besteht darin, das Stellglied des Überstromschutzes erneut zu öffnen, obwohl es bereits aufgrund der Überschreitung des Stromgrenzwertes geschlossen wurde, d. h. die Stromversorgung der Last unterbrochen wurde.

Es ist Aufgabe der Erfindung, eine Möglichkeit zu schaffen, die es erlaubt, schwere Lasten mit großen Anlaufströmen mithilfe eines Schutzschalters zu betreiben.

Diese Aufgabe wird gelöst durch ein Verfahren gemäß Anspruch 1.

Die Erfindung beruht auf dem Grundgedanken, dass nicht jede Überschreitung des Stromgrenzwertes oder der Grenzsteigung der Veränderung der Stromstärke durch einen Kurzschluss hervorgerufen sein muss. Vielmehr können große Stromstärken auch auftreten, wenn schwere Lasten, wie zum Beispiel größere kapazitive Lasten oder große Motoren, eingeschaltet werden. Diese beiden Fälle können jedoch dann durch den Verlauf der Ausgangsspannung unterschieden werden, wenn das Stellglied geschlossen ist.

Dabei unterbricht das Stellglied in geschlossener Position die Verbindung zwischen einer Stromversorgung und Last. In geöffneter Position verbindet das Stellglied die Last mit der Stromversorgung.

Falls das Überschreiten des Stromgrenzwertes der Stromstärke durch einen Kurzschluss hervorgerufen wurde, dann baut sich die Ausgangsspannung sehr schnell ab, sobald das Stellglied geschlossen wird oder konnte sich gar nicht erst aufbauen.

Anders verhält es sich, wenn das Überschreiten des Stromgrenzwertes durch den Anlaufstrom einer schweren Last hervorgerufen wird. In diesem Fall baut sich nach dem Schließen des Stellglieds die Ausgangsspannung nur langsam ab, sodass sie oberhalb eines Spannungsgrenzwertes liegt.

Aufgrund dieser eindeutig unterschiedlichen Reaktionen auf das Schließen des Stellgliedes kann ein Kurzschluss von der Inbetriebnahme einer schweren Last unterschieden werden.

Das Unterbrechen des Stromes dient außerdem dazu, das Stellglied vor Schäden durch große und dauerhafte Ströme zu schützen.

Vorzugsweise öffnet die Steuereinheit das Stellglied stetig und/oder gleichmäßig, sodass die Ausgangsspannung mit einer annähernd konstanten Rate ansteigt. Dadurch wird die Erkennung von Betriebszuständen der Last vereinfacht.

In einer Ausführungsform schließt die Steuereinheit das Stellglied, sobald im laufenden Betrieb die Stromstärke erstmalig einen Stromgrenzwert überschreitet oder mit einer Steigung größer einer Grenzsteigung ansteigt, und führt anschließend, insbesondere nach einer Pause im Bereich von Millisekunden, Schritt a) aus. Auf diese Weise wird eine hohe Betriebssicherheit erreicht, da zunächst die Last vollständig vom Strom getrennt wird, bevor eine Erkennung der Last erfolgt.

In einer Ausführungsvariante kann nach Ausführen von Schritt c) Schritt a) auch wiederholt werden, falls die Ausgangsspannung (U) in Schritt c) erstmalig unterhalb des Spannungsgrenzwertes (U_{Last}) liegt, sodass die Erkennungsgenauigkeit der Last verbessert wird.

Vorzugsweise steuert die Steuereinheit das Stellglied in Abhängigkeit der gemessenen Stromstärke mit einer Reaktionszeit von unter 100 µs, insbesondere unter 50 µs.

In einer Ausgestaltung der Erfindung wird beim wiederholten Ausführen der Schritte a) bis d) der Stromgrenzwert erhöht.

Die Aufgabe wird ferner durch einen Schutzschalter gemäß Anspruch 7 gelöst, sodass auf Veränderungen der Stromstärke reagiert werden kann.

Vorzugsweise ist die Steuereinheit ein Mikrocontroller, wodurch die Steuereinheit kostengünstig herzustellen ist.

In einer Ausführungsvariante ist das Stellglied ein Feldeffekttransistor, insbesondere ein MOSFET, da Feldeffekttransistoren kurze Reaktionszeiten haben.

Weitere Vorteile und Merkmale der Erfindung ergeben sich aus der nachfolgenden Beschreibung sowie aus den beigefügten Zeichnungen, auf die Bezug genommen wird. In den Zeichnungen zeigen:
- Figur 1 schematisiert einen Aufbau eines erfindungsgemäßen Schutzschalters,
- Figur 2 den Verlauf der Ausgangsspannung sowie des Stroms während der Ausführung des erfindungsgemäßen Verfahrens, und
- Figur 3 den Verlauf der Ausgangsspannung und des Stroms während der Ausführung des erfindungsgemäßen Verfahrens in einem anderen Szenario.

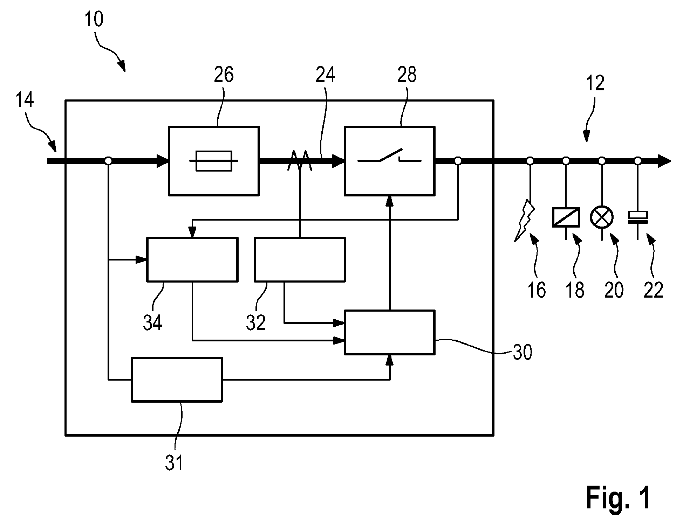

In Figur 1 ist ein Schaubild eines Schutzschalters 10 dargestellt, der eine Last 12 mit einer Stromversorgung 14 verbindet.

Die Last 12 kann dabei ein Kurzschluss 16, eine induktive Last 18, eine ohmsche Last 20 oder eine kapazitive Last 22 sein.

Der Schutzschalter 10 weist eine Hauptleitung 24 auf, die die Stromversorgung 14 mit der Last 12 verbindet. In der Hauptleitung 24 sind eine Sicherung 26 sowie ein Stellglied 28 angeordnet, wobei mithilfe des Stellglieds 28 die Ausgangsspannung U des Schutzschalters 10 kontrolliert sowie auch die Hauptleitung 24 unterbrochen werden kann. Das Stellglied 28 ist beispielsweise ein Feldeffekttransistor, insbesondere ein MOSFET.

Das Stellglied 28 wird mithilfe einer Steuereinheit 30, die insbesondere ein Mikrocontroller ist, gesteuert, sodass das Stellglied 28 von der Steuereinheit 30 gesteuert wird. Die Steuereinheit 30 wird durch eine interne Versorgung 31 mit Strom versorgt.

Ein Strommesser 32 ist im Schutzschalter 10 vorgesehen und misst die Stromstärke I durch die Hauptleitung 24. Das Ergebnis der Stromstärkenmessung übermittelt der Strommesser 32 an die Steuereinheit 30.

Zudem weist der Schutzschalter 10 einen Spannungsmesser 34 auf, der die Ausgangsspannung U misst und das Ergebnis der Steuereinheit 30 übermittelt.

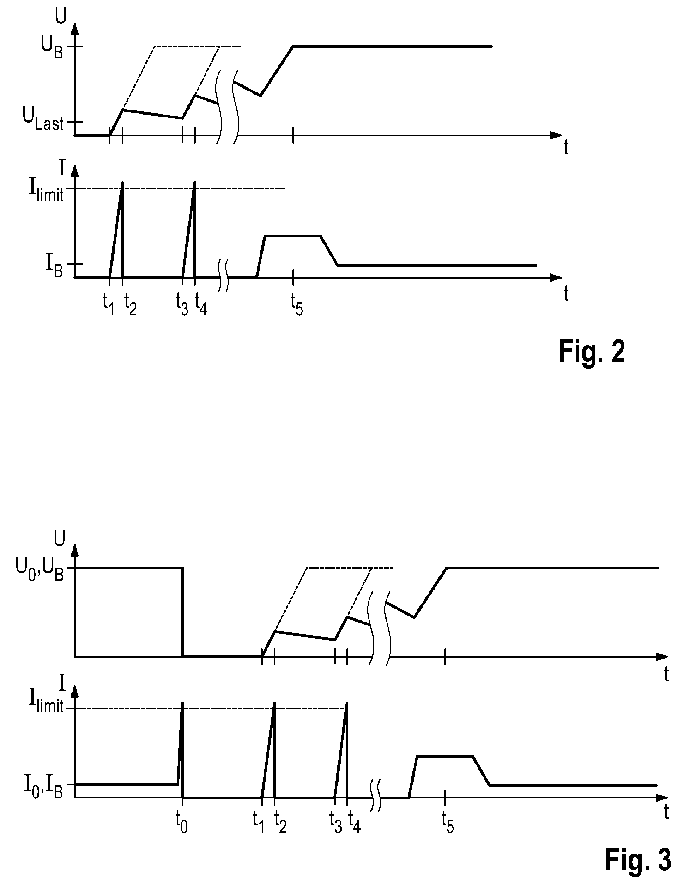

Das Verfahren zur Steuerung des Schutzschalters 10 wird nun anhand der Figuren 2 und 3 erläutert. Die Figuren zeigen den zeitlichen Verlauf der Ausgangsspannung U und den Verlauf der Stromstärke I, wobei vertikal untereinander bzw. übereinander aufgetragene Punkte dem gleichen Zeitpunkt entsprechen.

In Figur 2 ist der Spannungs- bzw. Stromverlauf bei Inbetriebnahme einer schweren Last dargestellt. Hierzu wird zunächst zum Zeitpunkt t₁ das Stellglied 28 durch die Steuereinheit 30 stetig und/oder gleichmäßig geöffnet. Im Falle eines Feldeffekttransistors als Stellglied 28 wird die von der Steuereinheit 30 zur Steuerung des Stellglieds 28 verwandte Steuerspannung mit einer Rampe, das heißt mit einer gleichmäßigen Steigung, stetig vergrößert.

Währenddessen wird mithilfe des Strommessers 32 die Stromstärke I gemessen. Die Messung kann dabei kontinuierlich erfolgen, wobei unter "kontinuierlich" das Aufnehmen von Messpunkten in zeitlich sehr kurzem Abstand zu verstehen ist. Auch kann gleichzeitig mithilfe des Spannungsmessers 34 die Ausgangsspannung U, die an der Last 12 anliegt, gemessen werden, insbesondere ebenfalls kontinuierlich.

Überschreitet die Stromstärke I einen Stromgrenzwert Iₗᵢₘᵢₜ, wird zum Schutz vor Überlastung des Schutzschalters 10, insbesondere des Stellglieds 28, sowie der gesamten Schaltung das Stellglied 28 von der Steuereinheit 30 geschlossen (Zeitpunkt t₂).

Im nun stromlosen Zustand misst der Spannungsmesser 34 die Ausgangsspannung U und übermittelt das Messergebnis an die Steuereinheit 30.

Liegt die Ausgangsspannung U unterhalb eines vorbestimmten Spannungsgrenzwertes U_{Last} oder insbesondere nahe Null, so liegt ein Kurzschluss 16 vor, da sich die Ausgangsspannung U über den Kurzschluss 16 rasch abbauen konnte. In diesem Fall hält die Steuereinheit 30 das Stellglied 28 in vollständig geschlossenem Zustand, sodass die Last 12 von der Stromversorgung 14 permanent getrennt ist.

Wird der Spannungsgrenzwert U_{Last} erstmalig unterschritten, so kann das Stellglied 28 nochmals geöffnet werden bis die Stromstärke I den Stromgrenzwert Iₗᵢₘᵢₜ überschreitet, um das Messergebnis und somit die korrekte Erkennung der Last 12 zu überprüfen.

Im anderen Fall, in dem das Überschreiten des Stromgrenzwertes limit nicht durch einen Kurzschluss 16 in der Last 12 verursacht wurde, kann die Ausgangsspannung U nicht abgebaut werden und liegt deswegen oberhalb des Spannungsgrenzwertes U_{Last}.

In einem solchen Fall öffnet die Steuereinheit 30 daraufhin (Zeitpunkt t₃), beispielsweise nach kurzer Wartezeit im Bereich von einigen Millisekunden, durch ein entsprechendes Steuersignal an das Stellglied 28 das Stellglied 28 wieder und die Ausgangsspannung U steigt stetig und mit gleichmäßiger Steigung an. Dabei überschreitet die Ausgangsspannung U das Niveau, das sie vor dem Schließen des Stellglieds 28 erreicht hatte.

Gleichzeitig steigt auch die Stromstärke I wieder stark an, bis der Stromgrenzwert Iₗᵢₘᵢₜ überschritten wird (Zeitpunkt t₄). Durch Messen und Vergleichen der Stromstärke I mit dem Stromgrenzwert Iₗᵢₘᵢₜ mittels des Strommessers 32 und der Steuereinheit 30 wird das Überschreiten des Stromgrenzwertes Iₗᵢₘᵢₜ durch die Steuereinheit 30 festgestellt und das Stellglied 28 abermals geschlossen.

Dabei kann der Stromgrenzwert Iₗᵢₘᵢₜ im Vergleich zum Stromgrenzwert des vorherigen Durchlaufes (Zeitpunkt t₂) erhöht worden sein, sodass der gewünschte Betriebszustand schneller erreicht werden kann.

Wieder wird die Ausgangsspannung U im stromlosen Zustand gemessen und mit dem Spannungsgrenzwert U_{Last} verglichen. Liegt auch nun wieder die Ausgangsspannung U oberhalb des Spannungsgrenzwertes U_{Last} wird das Stellglied 28 geöffnet, ansonsten bleibt es geschlossen.

Durch Wiederholen dieser Schritte wird die Ausgangsspannung U schrittweise erhöht, bis ein Betriebswert U_{B} erreicht ist (Zeitpunkt t₅). In diesem letzten Schritt, in dem die Ausgangsspannung U ihren Betriebswert U_{B} erreicht, steigt die Stromstärke I nicht mehr oberhalb des Stromgrenzwertes Iₗᵢₘᵢₜ, sondern lediglich auf einen Wert unterhalb des Stromgrenzwertes Iₗᵢₘᵢₜ. Dieser Wert kann bereits der Betriebswert I_{B} der Stromstärke sein oder die Stromstärke I fällt danach auf ihren Betriebswert I_{B} ab. In beiden Fällen ist nun der stabile Betriebszustand der schweren Last erreicht.

Auch der Fall, dass ein Kurzschluss vorliegt, der erst bei einer bestimmten angelegten Ausgangsspannung U_{KS} auftritt, beispielsweise aufgrund einer defekten Isolierung, wird von dem beschriebenen Verfahren aufgefangen. In diesem Fall ist es nicht möglich, die Ausgangsspannung U über den Wert U_{KS}, bei dem der Kurzschluss auftritt, zu erhöhen, ohne dass die Stromstärke I den Stromgrenzwert Iₗᵢₘᵢₜ überschreitet.

Detektiert nun die Steuereinheit 30, dass die Ausgangsspannungen U nach dem Schließen des Stellglieds 28 wiederholt ohne wesentliche Abweichung voneinander sind, so öffnet die Steuereinheit 30 das Stellglied 28 nicht ein weiteres Mal. Die Last 12 ist nun von der Stromversorgung 14 permanent getrennt.

In den in Figur 3 dargestellten Spannungs- und Stromverläufen wird eine schwere Last im laufenden Betrieb zugeschaltet.

Im laufenden Betrieb befindet sich die Ausgangsspannung U auf einem annähernd konstanten Wert U₀, der dem Betriebswert U_{B} entsprechen kann. Ebenfalls befindet sich die Stromstärke I auf einem annähernd konstanten Wert I₀, der dem Betriebswert I_{B} entsprechen kann. Auch während dieses annähernd konstanten, laufenden Betriebs wird mithilfe des Strommessers 32 und der Steuereinheit 30 die Stromstärke I gemessen und mit dem Stromgrenzwert Iₗᵢₘᵢₜ verglichen.

Zum Zeitpunkt t₀ wird nun eine schwere Last, ähnlich der Last im Szenario nach Figur 2, zugeschaltet. Infolgedessen steigt die Stromstärke I stark an und überschreitet den Stromgrenzwert Iₗᵢₘᵢₜ. Da es sich hierbei um das erstmalige Überschreiten des Stromgrenzwertes Iₗᵢₘᵢₜ im laufenden Betrieb handelt, schließt die Steuereinheit 30 das Stellglied 28 und unterbricht die Ausgangsspannung U vollständig. Entsprechend wird auch der Strom I unterbrochen.

Das Schließen des Stellglieds 28 durch die Steuereinheit 30 erfolgt dabei beispielsweise mit einer Reaktionszeit von 50 µs.

Der Schutzschalter 10 und die Last 12 befinden sich nun im ausgeschalteten Zustand, wie zu Beginn des in Figur 2 beschriebenen Szenarios, und die Last 12 kann wieder in Betrieb genommen werden. Dazu wird das oben beschriebene Verfahren ausgeführt, sodass die Ausgangsspannung U schrittweise erhöht wird, bis zum Zeitpunkt t₅ die Ausgangsspannung U ihren Betriebswert U_{B} erreicht hat. Das Verfahren ist dabei analog zum Verfahren, das zum Szenario zu Figur 2 beschrieben wurde.

Selbstverständlich ist es auch denkbar, dass nicht die Stromstärke I mit einem Stromgrenzwert Iₗᵢₘᵢₜ verglichen wird, sondern die Veränderung der Stromstärke, sprich ihre Steigung, mit einer vorbestimmten Grenzsteigung.

Ebenso kann die Ausgangsspannung U von einem Spannungsmesser 34 kontinuierlich gemessen und die Messergebnisse zur Steuereinheit 30 übermittelt werden, sodass eine präzise Regelung der Ausgangsspannung U von der Steuereinheit 30 ermöglicht wird.

Zudem kann die Steuereinheit 30 derart ausgebildet sein, dass sie die Ausgangsspannung U in Abhängigkeit der gemessenen Stromstärke I mit einer Reaktionszeit unter 100 µs, insbesondere 50 µs schaltet.

## Patentansprüche

1. Verfahren zur Steuerung eines Schutzschalters (10), bei dem die Stärke des durch den Schutzschalter (10) fließenden Stroms (I) und die an einer Last (12) anliegenden Ausgangsspannung (U) gemessen, insbesondere kontinuierlich gemessen werden, die Ergebnisse der Messungen durch eine Steuereinheit (30) ausgewertet werden, wobei die Steuereinheit (30) ein Stellglied (28) des Schutzschalters (10) in Abhängigkeit von den Ergebnissen der Messungen steuert, **dadurch gekennzeichnet, dass** die Steuereinheit (30) die folgenden Schritte ausführt:
a) Messen und Vergleichen der Stromstärke (I) mit einem Stromgrenzwert (Iₗᵢₘᵢₜ) und/oder der Veränderung der Stromstärke (I) mit einer Grenzsteigung, während das Stellglied (28) geöffnet wird,
b) Schließen des Stellgliedes (28), sobald die Stromstärke (I) in Schritt a) einen Stromgrenzwert (Iₗᵢₘᵢₜ) überschreitet oder mit einer Steigung größer einer Grenzsteigung ansteigt.
c) Messen und Vergleichen der Ausgangsspannung (U) mit einem Spannungsgrenzwert (U_{Las}t),
d) Ausführen von Schritt a), falls in Schritt c) die Ausgangsspannung (U) oberhalb des Spannungsgrenzwertes (U_{Last}) liegt,
wobei das Stellglied (28) in geschlossener Position eine Hauptleitung (24) zwischen einer Stromversorgung (14) und der Last (12) unterbricht, und das Stellglied (28) in geöffneter Position die Last (12) mit der Stromversorgung (14) verbindet.

2. Verfahren nach Anspruch 1, **dadurch gekennzeichnet, dass** die Steuereinheit (30) das Stellglied (28) stetig und/oder gleichmäßig öffnet, sodass die Ausgangsspannung (U) mit einer annähernd konstanten Rate ansteigt.

3. Verfahren nach einem der vorhergehenden Ansprüche, **dadurch gekennzeichnet, dass** die Steuereinheit (30) das Stellglied (28) schließt, sobald im laufenden Betrieb die Stromstärke (I) erstmalig den Stromgrenzwert (Iₗᵢₘᵢₜ) überschreitet oder mit einer Steigung größer einer Grenzsteigung ansteigt, und anschließend, insbesondere nach eine Pause im Bereich von Millisekunden, Schritt a) ausführt.

4. Verfahren nach einem der vorhergehenden Ansprüche, **dadurch gekennzeichnet, dass** nach Ausführen von Schritt c) Schritt a) auch wiederholt wird, falls die Ausgangsspannung (U) in Schritt c) erstmalig unterhalb des Spannungsgrenzwertes (U_{Last}) liegt.

5. Verfahren nach einem der vorhergehenden Ansprüche, **dadurch gekennzeichnet, dass** die Steuereinheit (30) das Stellglied (28) in Abhängigkeit der gemessenen Stromstärke (I) mit einer Reaktionszeit von unter 100 µs, insbesondere unter 50 µs steuert.

6. Verfahren nach einem der vorhergehenden Ansprüche, **dadurch gekennzeichnet, dass** beim wiederholten Ausführen der Schritte a) bis d) der Stromgrenzwert (Iₗᵢₘᵢₜ) erhöht wird.

7. Schutzschalter mit einer Steuereinheit (30), einem Strommesser (32), einem Spannungsmesser (34) und einem Stellglied (28), **dadurch gekennzeichnet, dass** der Schutzschalter (10) zur Durchführung des Verfahrens gemäß einem der vorhergehenden Ansprüche eingerichtet ist.

8. Schutzschalter nach Anspruch 7, **dadurch gekennzeichnet, dass** die Steuereinheit (30) ein Mikrocontroller ist.

9. Schutzschalter nach Anspruch 7 oder 8, **dadurch gekennzeichnet, dass** das Stellglied (28) ein Feldeffekttransistor, insbesondere ein MOSFET ist.

## Claims

1. A method of controlling a circuit breaker (10) in which the intensity of the current (I) flowing through the circuit breaker (10) and the output voltage (U) applied to a load (12) are measured, in particular measured continuously, and the results of the measurements are evaluated by a control unit (30), the control unit (30) controlling an actuator (28) of the circuit breaker (10) as a function of the results of the measurements, **characterized in that** the control unit (30) carries out the following steps:
a) measuring and comparing the current intensity (I) with a current limit value (Iₗᵢₘᵢₜ) and/or the change in current intensity (I) with a limit gradient while the actuator (28) is opened;
b) closing the actuator (28) as soon as the current intensity (I) in step a) exceeds a current limit value (Iₗᵢₘᵢₜ) or increases with a gradient larger than a limit gradient;
c) measuring and comparing the output voltage (U) with a voltage limit value (U_{load});
d) carrying out step a) if in step c) the output voltage (U) is above the voltage limit value (U_{load});
the actuator (28) in the closed position interrupting a main line (24) between a power supply (14) and the load (12), and the actuator (28) in the open position connecting the load (12) to the power supply (14).

2. The method according to claim 1, **characterized in that** the control unit (30) opens the actuator (28) steadily and/or evenly, so that the output voltage (U) rises at an approximately constant rate.

3. The method according to either of the preceding claims, **characterized in that** the control unit (30) closes the actuator (28) as soon as the current intensity (I) exceeds the current limit value (Iₗᵢₘᵢₜ) for the first time during operation or increases with a gradient larger than a limit gradient, and subsequently, in particular after a pause in the range of milliseconds, carries out step a).

4. The method according to any of the preceding claims, **characterized in that** after carrying out step c), step a) is also repeated if the output voltage (U) in step c) is below the voltage limit value (U_{load}) for the first time.

5. The method according to any of the preceding claims, **characterized in that** the control unit (30) controls the actuator (28) as a function of the measured current intensity (I) with a response time of less than 100 µs, in particular less than 50 µs.

6. The method according to any of the preceding claims, **characterized in that** during repeated execution of steps a) to d), the current limit value (Iₗᵢₘᵢₜ) is increased.

7. A circuit breaker comprising a control unit (30), an amperemeter (32), a voltmeter (34), and an actuator (28), **characterized in that** the circuit breaker (10) is configured to carry out the method according to any of the preceding claims.

8. The circuit breaker according to claim 7, **characterized in that** the control unit (30) is a microcontroller.

9. The circuit breaker according to claim 7 or 8, **characterized in that** the actuator (28) is a field-effect transistor, in particular a MOSFET.

## Revendications

1. Procédé de commande d'un disjoncteur de protection (10), dans lequel l'intensité du courant (I) circulant à travers le disjoncteur de protection (10) et la tension de sortie (U) appliquée à une charge (12) sont mesurées, sont en particulier continuellement mesurées, les résultats des mesures étant évalués par une unité de commande (30), l'unité de commande (30) commandant un actionneur (28) du disjoncteur de protection (10) en fonction des résultats des mesures, caractérisé en ce l'unité de commande (30) exécute les étapes suivantes :
a) mesure et comparaison de l'intensité de courant (I) avec une valeur limite de courant (lₗᵢₘᵢₜ) et/ou du changement de l'intensité de courant (I) avec une pente limite pendant que l'actionneur (28) est ouvert,
b) fermeture de l'actionneur (28) dès que l'intensité de courant (I) à l'étape a) dépasse une valeur limite de courant (Iₗᵢₘᵢₜ) ou monte avec une pente supérieure à une pente limite,
c) mesure et comparaison de la tension de sortie (U) avec une valeur limite de tension (U_{Last}),
d) exécution de l'étape a) si à l'étape c) la tension de sortie (U) est au-dessus de la valeur limite de tension (U_{Last}),
l'actionneur (28) coupant dans la position fermée une ligne principale (24) entre une alimentation en courant (14) et la charge (12), et l'actionneur (28) reliant dans la position ouverte la charge (12) à l'alimentation en courant (14).

2. Procédé selon la revendication 1, **caractérisé en ce que** l'unité de commande (30) ouvre l'actionneur (28) de manière continue et/ou uniforme de sorte que la tension de sortie (U) monte à une vitesse approximativement constante.

3. Procédé selon l'une des revendications précédentes, **caractérisé en ce que** l'unité de commande (30) ferme l'actionneur (28) dès que l'intensité de courant (I) dépasse la valeur limite de courant (lₗᵢₘᵢₜ) ou monte avec une pente supérieure à une pente limite pour la première fois au cours du fonctionnement, et exécute ensuite l'étape a) en particulier après une pause dans la plage des millisecondes.

4. Procédé selon l'une des revendications précédentes, **caractérisé en ce qu'**après l'exécution de l'étape c), l'étape a) est également répétée au cas où la tension de sortie (U) à l'étape c) est pour la première fois au-dessous de la valeur limite de tension (U_{Last}).

5. Procédé selon l'une des revendications précédentes, caractérisé en ce l'unité de commande (30) commande l'actionneur (28) en fonction de l'intensité de courant (I) mesurée avec un temps de réaction inférieur à 100 µs, en particulier inférieur à 50 µs.

6. Procédé selon l'une des revendications précédentes, caractérisé en ce la valeur limite de courant (Iₗᵢₘᵢₜ) est augmentée lors de l'exécution répétée des étapes a) à d).

7. Disjoncteur de protection présentant une unité de commande (30), un ampèremètre (32), un voltmètre (34) et un actionneur (28), **caractérisé en ce que** le disjoncteur de protection (10) est conçu pour l'exécution du procédé selon l'une des revendications précédentes.

8. Disjoncteur de protection selon la revendication 7, **caractérisé en ce que** l'unité de commande (30) est un microcontrôleur.

9. Disjoncteur de protection selon la revendication 7 ou 8, **caractérisé en ce que** l'actionneur (28) est un transistor à effet de champ, en particulier un MOSFET.
